(19) Europäisches Patentamt
European Patent Office
Office européen des brevets

(11) **EP 4 648 130 A1**

(12) **EUROPEAN PATENT APPLICATION**

(43) Date of publication:
**12.11.2025 Bulletin 2025/46**

(21) Application number: **25174574.1**

(22) Date of filing: **06.05.2025**

(51) International Patent Classification (IPC):
*H01M 4/36* (2006.01)   *H01M 4/38* (2006.01)
*H01M 4/583* (2010.01)   *H01M 10/052* (2010.01)
*H01M 10/0569* (2010.01)   *H01M 4/133* (2010.01)
*H01M 4/134* (2010.01)

(52) Cooperative Patent Classification (CPC):
**H01M 4/362; H01M 4/386; H01M 4/583;**
**H01M 10/052; H01M 10/0569;** H01M 4/133;
H01M 4/134; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.05.2024   CN 202410574920**

(71) Applicant: **Ningde Amperex Technology Limited**
**Ningde City, Fujian Province 352100 (CN)**

(72) Inventor: **LI, Fangru**
**Ningde City, Fujian Province, China, 352100 (CN)**

(74) Representative: **Icosa**
**83 avenue Denfert-Rochereau**
**75014 Paris (FR)**

(54) **SECONDARY BATTERY AND ELECTRONIC DEVICE**

(57)     A secondary battery and an electronic device. The secondary battery includes a negative electrode, a positive electrode, and an electrolyte solution. The negative electrode includes a negative current collector and a negative electrode composite layer disposed on at least one surface of the negative current collector. The negative electrode composite layer contains a conductive agent and silicon-carbon composite particles. An average particle diameter of the silicon-carbon composite particles is D $\mu$m. The silicon-carbon composite particles include silicon and carbon, and based on a sum of masses of the silicon and carbon, a mass percent of the silicon is C%, $0.21 \leq C/D^2 \leq 1.2$. The electrolyte solution comprises propylene carbonate and ethylene carbonate. Based on a mass of the electrolyte solution, a sum of mass percent of the propylene carbonate and the ethylene carbonate is H%, $15 \leq H \leq 50$.

**EP 4 648 130 A1**

## Description

### TECHNICAL FIELD

This application relates to the technical field of energy storage, and in particular, to a secondary battery and an electronic device.

### BACKGROUND

As a technical solution to storage and supply of energy, secondary batteries are an important option for meeting the needs of sustainable development. With the continuous expansion of the application fields of the secondary batteries, the requirement on the energy density of the secondary batteries is increasingly higher. Graphite materials are widely used as a conventional negative electrode material, but the theoretical capacity of graphite is limited. In contrast, a silicon material possesses a higher theoretical capacity, richness of sources, cost-effectiveness, and the potential to become a new generation of secondary battery materials. However, the silicon material expands and shrinks considerably during the intercalation and deintercalation of metal ions, thereby resulting in the deterioration of electrochemical performance. Therefore, on the basis of increasing the energy density, other electrochemical performance metrics of the secondary battery need to be prevented from deteriorating, so as to ensure wide application of the silicon material.

### SUMMARY

An objective of this application is to provide a secondary battery and an electronic device to alleviate the resistance growth rate during high-temperature cycling and the resistance growth rate during fast-charge cycling while achieving a relatively high energy density.

According to a first aspect, this application provides a secondary battery and an electronic device. The secondary battery includes a negative electrode, a positive electrode, and an electrolyte solution. The negative electrode includes a negative current collector and a negative electrode composite layer disposed on at least one surface of the negative current collector. The negative electrode composite layer contains a conductive agent and silicon-carbon composite particles. An average particle diameter of the silicon-carbon composite particles is D $\mu$m. The silicon-carbon composite particles include silicon and carbon. Based on a sum of masses of the silicon and carbon, a mass percent of the silicon is C%, satisfying: $0.21 \leq C/D^2 \leq 1.2$. The electrolyte solution includes propylene carbonate and ethylene carbonate. Based on a mass of the electrolyte solution, a sum of mass percent of the propylene carbonate and the ethylene carbonate is H%, satisfying: $15 \leq H \leq 50$. The secondary battery provided in this application alleviates the resistance growth rate during high-temperature cycling and the resistance growth rate during fast-charge cycling while achieving a relatively high energy density.

The applicant hereof finds that the resistivity of the secondary battery containing silicon-carbon composite particles increases considerably after being cycled. This type of performance deterioration is particularly evident after high-temperature cycling and fast-charge cycling. By setting the secondary battery in the above manner, the resistance growth rate during high-temperature cycling and the resistance growth rate during fast-charge cycling can be alleviated while achieving a relatively high energy density. The applicant hereof speculates that in a process of intercalation and deintercalation of metal ions, the silicon-carbon composite particles expand and shrink considerably in volume. Consequently, the conductive agent is displaced with the expansion of the silicon-carbon composite particles, but the position of the conductive agent is not completely restored with the shrinkage of the silicon-carbon particles, thereby breaking a conductive network inside the negative electrode. During high-temperature cycling and fast-charge cycling, the silicon-carbon composite particles expand and shrink in volume to a greater extent and at a faster speed, and the conductive network inside the negative electrode is more prone to break, thereby resulting in a significant increase in the resistivity of the secondary battery after high-temperature cycling and fast-charge cycling. The average particle diameter D $\mu$m of the silicon-carbon composite particles affects the stacking morphology of the silicon-carbon composite particles inside the negative electrode, and in turn, affects the distribution status and movable space of the conductive agent inside the negative electrode. The mass percent C% of silicon affects the degree and speed of volume expansion and shrinkage of the silicon-carbon composite particles. By controlling the average particle diameter D $\mu$m of the silicon-carbon composite particles and the mass percent C% of silicon to satisfy $0.21 \leq C/D^2 \leq 1.2$, the secondary battery alleviates the resistance growth rate during high-temperature cycling and the resistance growth rate during fast-charge cycling while achieving a relatively high energy density. On this basis, by adjusting the sum H% of the mass percent of propylene carbonate and ethylene carbonate in the electrolyte solution to satisfy $15 \leq H \leq 50$, the film-forming quality of the solid electrolyte interface film on the surface of the silicon-carbon composite particles can be optimized, and the connection between the silicon-carbon composite particle and the conductive agent can be strengthened, thereby further alleviating the resistance growth rate during high-temperature cycling and the resistance growth rate during fast-charge cycling of the secondary battery.

In some embodiments, $0.39 \le C/D^2 \le 0.96$. By adjusting the value of $C/D^2$ to fall within the above range, the coordination relationship between the movable space of the conductive agent and the degree and speed of volume expansion and shrinkage of the silicon-carbon composite particles can be further adjusted, thereby further alleviating the resistance growth rate during high-temperature cycling and the resistance growth rate during fast-charge cycling.

In some embodiments, $0.58 \le C/D^2 \le 0.88$. By adjusting the value of $C/D^2$ to fall within the above range, the resistance growth rate during high-temperature cycling and the resistance growth rate during fast-charge cycling can be further alleviated.

In some embodiments, $7.1 \le D \le 10.9$, and $25 \le C \le 59$. By adjusting the value of D and/or C to fall within the above range, the resistance growth rate during high-temperature cycling and the resistance growth rate during fast-charge cycling can be further alleviated.

In some embodiments, the electrolyte solution includes propyl propionate and ethyl propionate. Based on a mass of the electrolyte solution, a sum of mass percent of the propyl propionate and the ethyl propionate is L%, satisfying: $12 \le L \le 39$, and $18 \le H \le 44$. By adjusting the value of L and/or H to fall within the above range, the thickness and composition of the solid electrolyte interface film on the surface of the silicon-carbon composite particles can be adjusted, and the connection between the silicon-carbon composite particle and the conductive agent can be strengthened, thereby further reducing the probability of break of the conductive network inside the negative electrode, and alleviating the resistance growth rate during high-temperature cycling and the resistance growth rate during fast-charge cycling.

In some embodiments, the electrolyte solution satisfies at least one of the following conditions: (1) $18 \le L \le 34$; or (2) $24 \le H \le 39$. By adjusting the value of L and/or H to fall within the above range, the resistance growth rate during high-temperature cycling and the resistance growth rate during fast-charge cycling can be further alleviated.

In some embodiments, a mass percent of the propyl propionate is $L_1$%, and a mass percent of the ethyl propionate is $L_2$%, satisfying: $1.3 \le L_1/L_2 \le 2.8$. By adjusting the value of the $L_1/L_2$ ratio to fall within the above range, the uniformity of the solid electrolyte interface film can be improved, and the connection between the silicon-carbon composite particle and the conductive agent can be strengthened, thereby further reducing the probability of break of the conductive network inside the negative electrode, and further alleviating the resistance growth rate during high-temperature cycling and the resistance growth rate during fast-charge cycling. Optionally, $1.7 \le L_1/L_2 \le 2.3$.

In some embodiments, a mass percent of the propylene carbonate is $H_1$%, and a mass percent of the ethylene carbonate is $H_2$%, satisfying: $0.9 \le H_1/H_2 \le 2.3$. By adjusting the value of the $H_1/H_2$ ratio to fall within the above range, the uniformity of the solid electrolyte interface film can be improved, thereby further alleviating the resistance growth rate during high-temperature cycling and the resistance growth rate during fast-charge cycling. Optionally, $1.1 \le H_1/H_2 \le 2.0$.

In some embodiments, the electrolyte solution includes 1,3-propane sultone. Based on a mass of the electrolyte solution, a mass percent of the 1,3-propane sultone is P%, satisfying: $2.6 \le P \le 4.7$. By adjusting the value of P to fall within the above range, the resilience of the solid electrolyte interface film and the connectivity to the conductive agent can be improved, thereby reducing the probability of irreversible displacement of the conductive agent during volume expansion and shrinkage of the silicon-carbon composite particles, and further alleviating the resistance growth rate during high-temperature cycling and the resistance growth rate during fast-charge cycling. Optionally, $3.1 \le P \le 4.2$.

In some embodiments, the electrolyte solution includes at least one of fluorobenzene, fluoroethylene carbonate, or lithium difluorophosphate. Based on a mass of the electrolyte solution, the electrolyte solution satisfies at least one of the following conditions: (1) a mass percent of the fluorobenzene is $F_1$%, satisfying: $1.1 \le F_1 \le 4.3$; (2) a mass percent of the fluoroethylene carbonate is $F_2$%, satisfying: $10.3 \le F_2 \le 19.8$; or (3) a mass percent of the lithium difluorophosphate is $F_3$%, satisfying: $0.01 \le F_3 \le 0.32$. By controlling the electrolyte solution to satisfy at least one of the above conditions, the resilience of the solid electrolyte interface film and the connectivity to the conductive agent can be improved, thereby further reducing the probability of break of the conductive network inside the negative electrode, and further alleviating the resistance growth rate during high-temperature cycling and the resistance growth rate during fast-charge cycling.

In some embodiments, the electrolyte solution includes dimethyl sulfone. Based on a mass of the electrolyte solution, a mass percent of the dimethyl sulfone is S%, satisfying: $1.1 \le S \le 3.4$. By adjusting the value of S to fall within the above range, the resilience of the solid electrolyte interface film and the adsorptivity to the conductive agent can be improved, thereby reducing the probability of irreversible displacement of the conductive agent during volume expansion and shrinkage of the silicon-carbon composite particles, and further alleviating the resistance growth rate during high-temperature cycling and the resistance growth rate during fast-charge cycling.

In some embodiments, the electrolyte solution includes 1,4-dioxane. Based on a mass of the electrolyte solution, a mass percent of the 1,4-dioxane is W%, satisfying: $2.3 \le W \le 4.6$. By adjusting the value of W to fall within the above range, the resilience of the solid electrolyte interface film and the adsorptivity to the conductive agent can be improved, and the connection between the silicon-carbon composite particle and the conductive agent can be strengthened, thereby further alleviating the resistance growth rate during high-temperature cycling and the resistance growth rate during fast-charge cycling.

In some embodiments, $3.4 \le C/F_1^2 \le 13.8$. By adjusting the value of $C/F_1^2$ to fall within the above range, the coordination relationship between the resilience of the solid electrolyte interface film and the degree and speed of volume expansion and shrinkage of the silicon-carbon composite particles can be further adjusted, and the connection between the silicon-carbon composite particle and the conductive agent can be strengthened, thereby further alleviating the resistance growth rate during high-temperature cycling and the resistance growth rate during fast-charge cycling.

In some embodiments, the silicon-carbon composite particles include a carbon framework and a protection layer located on at least a part of a surface of the carbon framework. A material of the protection layer includes amorphous carbon. A material of the carbon framework includes at least one selected from the group consisting of of artificial graphite, natural graphite, mesocarbon microbeads, soft carbon, or hard carbon.

In some embodiments, the conductive agent includes carbon nanotubes. By using the conductive agent containing carbon nanotubes, the resistance growth rate during high-temperature cycling and the resistance growth rate during fast-charge cycling can be further alleviated.

A second aspect of this application provides an electronic device. The electronic device includes the secondary battery according to the first aspect of this application. The secondary battery provided in the second aspect of this application alleviates the resistance growth rate during high-temperature cycling and the resistance growth rate during fast-charge cycling while achieving a relatively high energy density.

Additional aspects and advantages of some embodiments of this application will be partly described or illustrated herein later or expounded through implementation of an embodiment of this application.

## DETAILED DESCRIPTION OF EMBODIMENTS

Some embodiments of this application will be described in detail below. No embodiment of this application is to be construed as a limitation on this application.

Unless otherwise expressly specified, the following terms used herein convey the meanings defined below.

According to a first aspect, this application provides a secondary battery and an electronic device. The secondary battery includes a negative electrode, a positive electrode, and an electrolyte solution. The negative electrode includes a negative current collector and a negative electrode composite layer disposed on at least one surface of the negative current collector. The negative electrode composite layer contains a conductive agent and silicon-carbon composite particles. An average particle diameter of the silicon-carbon composite particles is $D$ $\mu$m. The silicon-carbon composite particles include silicon and carbon. Based on a sum of masses of the silicon and carbon, a mass percent of the silicon is $C\%$, satisfying: $0.21 \leq C/D^2 \leq 1.2$. The electrolyte solution includes propylene carbonate and ethylene carbonate. Based on a mass of the electrolyte solution, a sum of mass percent of the propylene carbonate and the ethylene carbonate is $H\%$, satisfying: $15 \leq H \leq 50$. The secondary battery provided in this application alleviates the resistance growth rate during high-temperature cycling and the resistance growth rate during fast-charge cycling while achieving a relatively high energy density.

## Negative electrode

The negative electrode includes a negative current collector and a negative electrode composite layer disposed on at least one surface of the negative current collector. The negative electrode composite layer includes a negative active material. In some embodiments, a chargeable capacity of the negative active material is greater than a discharge capacity of the positive active material, so as to prevent unexpected precipitation of active materials (such as lithium metal) on the negative electrode during charging.

The negative active material includes silicon-carbon composite particles. In some embodiments, $0.21 \leq C/D_2 \leq 1.2$. In some embodiments, $0.21 \leq C/D_2 \leq 1.17$. In some embodiments, $0.39 \leq C/D_2 \leq 1.2$. In some embodiments, $0.39 \leq C/D_2 \leq 1.17$. In some preferred embodiments, $0.39 \leq C/D_2 \leq 0.96$. In some preferred embodiments, $0.39 \leq C/D_2 \leq 0.88$. In some preferred embodiments, $0.58 \leq C/D_2 \leq 0.96$. In some preferred embodiments, $0.58 \leq C/D^2 \leq 0.88$. In some embodiments, the value of $C/D_2$ is 0.21, 0.25, 0.28, 0.34, 0.39, 0.43, 0.51, 0.57, 0.58, 0.59, 0.67, 0.73, 0.77, 0.79, 0.88, 0.89, 0.95, 0.96, 0.99, 1.09, 1.13, 1.17, 1.19, 1.2, or a value falling within a range formed by any two thereof. By adjusting the value of $C/D^2$ to fall within the above range, the coordination relationship between the movable space of the conductive agent and the degree and speed of volume expansion and shrinkage of the silicon-carbon composite particles can be further adjusted, thereby further alleviating the resistance growth rate during high-temperature cycling and the resistance growth rate during fast-charge cycling.

In some embodiments, $7.1 \leq D \leq 10.9$. In some embodiments, $7.4 \leq D \leq 10.9$. In some embodiments, $7.1 \leq D \leq 9.2$. In some embodiments, $7.4 \leq D \leq 9.2$. In some embodiments, $7.5 \leq D \leq 9.2$. In some embodiments, $7.4 \leq D \leq 8.8$. In some embodiments, $7.5 \leq D \leq 8.8$. In some embodiments, the value of $D$ is 7.1, 7.3, 7.4, 7.5, 7.6, 7.8, 8.2, 8.4, 8.8, 9.0, 9.2, 9.4, 9.5, 9.9, 10.3, 10.5, 10.7, 10.9, or a value falling within a range formed by any two thereof. By adjusting the value of $D$ to fall within the above range, the resistance growth rate during high-temperature cycling and the resistance growth rate during fast-charge cycling can be further alleviated.

In some embodiments, the value of $C$ satisfies $25 \leq C \leq 59$. In some embodiments, the value of $C$ satisfies $25 \leq C \leq$

54. In some embodiments, the value of C satisfies $33 \leq C \leq 59$. In some preferred embodiments, $33 \leq C \leq 54$. In some preferred embodiments, $33 \leq C \leq 48$. In some preferred embodiments, $45 \leq C \leq 54$. In some preferred embodiments, $45 \leq C \leq 48$. In some embodiments, the value of C is 25, 27, 28, 29, 30, 33, 36, 38, 39, 40, 43, 45, 46, 47, 48, 51, 54, 55, 59, or a value falling within a range formed by any two thereof. By adjusting the value of C to fall within the above range, the resistance growth rate during fast-charge cycling and the resistance growth rate during high-temperature cycling can be further alleviated.

In some embodiments, the silicon-carbon composite particles include at least one of a silicon-based substance, a silicon-carbon material (a composite of a silicon-based substance and a carbon-based substance), or an oxide of silicon ($SiO_x$, $0 < x \leq 2$).

In some embodiments, the silicon-based substance may be silicon particles, silicon alloy particles, or the like.

As an example, the composite of the silicon-based substance and the carbon-based substance may be an active material obtained by the following process: dispersing silicon nanoparticles with an average particle diameter of 200 nm or less onto carbon-based substance particles, and then coating the carbon-based substance particles with carbon, an active material in which silicon (Si) particles exist on and inside graphite, and the like. The average particle diameter of the secondary particles of the composite of the silicon-based substance and the carbon-based substance may be 5 $\mu$m to 20 $\mu$m. The secondary particles of the composite of the silicon-based substance and the carbon-based substance in this application mean the silicon-based substance particles and/or the carbon-based substance particles in the composite of the silicon-based substance and the carbon-based substance, such as silicon nanoparticles. The average particle diameter of the silicon nanoparticles may be 5 nm or more, for example, 10 nm or more, for example, 20 nm or more, for example, 50 nm or more, for example, 70 nm or more. The average particle diameter of the silicon nanoparticles may be 200 nm or less, 150 nm or less, 100 nm or less, 50 nm or less, 20 nm or less, or, 10 nm or less. For example, the average particle diameter of the silicon nanoparticles may be 100 nm to 150 nm. The average particle diameter of the secondary particles of the composite of the silicon-based substance and the carbon-based substance may be 5 $\mu$m to 20 $\mu$m, for example, 7 $\mu$m to 15 $\mu$m, for example, 10 $\mu$m to 13 $\mu$m.

In some preferred embodiments, the silicon-carbon composite particles include a carbon framework and a protection layer located on at least a part of a surface of the carbon framework. A material of the protection layer includes amorphous carbon. A material of the carbon framework includes at least one selected from the group consisting of artificial graphite, natural graphite, mesocarbon microbeads, soft carbon, or hard carbon. By using this type of silicon-carbon composite particles, the resistance growth rate during fast-charge cycling and the resistance growth rate during high-temperature cycling can be further alleviated.

In some embodiments, based on the total number of particles in the negative electrode composite layer, the number percent of the silicon-carbon composite particles is 1% to 25%. For example, the number percent of the silicon-carbon composite particles is 1%, 3%, 6%, 7%, 9%, 11%, 12%, 15%, 17%, 19%, 20%, 21%, 24%, 25%, or a value falling within a range formed by any two thereof. By adjusting the number percent of the silicon-carbon composite particles in the negative electrode composite layer to fall within the above range, the resistance growth rate during fast-charge cycling and the resistance growth rate during high-temperature cycling can be further alleviated.

Optionally, the negative active material may further include an amorphous carbon material. The amorphous carbon may be soft carbon (low-temperature calcined carbon), hard carbon, mesophase pitch carbide, calcined coke, or the like.

In some embodiments, the negative electrode composite layer includes a conductive agent. The type of the conductive agent is not limited, and may be any known conductive material. Examples of the conductive agent may include, but are not limited to, carbon black such as acetylene black and Super P; materials such as amorphous carbon (for example, needle coke); carbon nanotubes; graphene, and the like. The foregoing conductive agents may be used alone or used in combination arbitrarily.

In some preferred embodiments, the conductive agent includes carbon nanotubes. By using the conductive agent containing carbon nanotubes, the resistance growth rate during high-temperature cycling and the resistance growth rate during fast-charge cycling of the secondary battery can be further alleviated.

The negative current collector is not particularly limited herein, as long as the objectives of this application can be achieved. For example, the negative current collector may include a copper foil, an aluminum foil, a nickel foil, a stainless steel foil, a titanium foil, foamed nickel, foamed copper, a conductive-metal-clad polymer substrate, or the like. The conductive metal includes, but is not limited to, copper, nickel, or titanium. The material of the polymer substrate includes, but is not limited to, at least one of polyethylene, polypropylene, poly(ethylene-co-propylene), polyethylene terephthalate, polyethylene naphthalate, or poly(p-phenylene terephthalamide). The thicknesses of the negative current collector and the negative electrode composite layer are not particularly limited herein, as long as the objectives of this application can be achieved. For example, the thickness of the negative current collector is 4 $\mu$m to 12 $\mu$m, and the thickness of the negative electrode composite layer on a single side is 30 $\mu$m to 160 $\mu$m. In this application, the negative electrode composite layer may be disposed on one surface of the negative current collector in a thickness direction or on both surfaces of the negative current collector in the thickness direction. It is hereby noted that the "surface" here may be the entire region of the negative current collector, or a partial region of the negative current collector, without being particularly limited herein, as long as the objectives of the application can be achieved.

The negative electrode mixture layer may include a negative binder. The negative electrode binder can strengthen the bonding between the particles of the negative active material and the bonding between the negative active material and the current collector. The type of the negative electrode binder is not particularly limited, as long as the material of the binder is stable to the electrolyte solution or the solvent used in manufacturing the electrode. In some embodiments, the negative electrode binder includes a resin binder. Examples of the resin binder include, but are not limited to, fluororesin, polyacrylonitrile (PAN), polyimide resin, acrylic resin, polyolefin resin, and the like. When a negative electrode composite slurry is prepared from an aqueous solvent, the negative electrode binder includes, but is not limited to, hydroxyethylcarboxymethylcellulose (HECMC) or a salt thereof, carboxymethyl cellulose (CMC) or a salt thereof, styrene-butadiene rubber (SBR), polyacrylic acid (PAA) or a salt thereof, polyacrylate ester, polyvinyl alcohol, and the like.

As an example, the negative electrode may be prepared by the following method: coating a negative current collector with a negative electrode composite slurry that contains a negative electrode binder, silicon-carbon composite particles, a conductive agent, and the like; drying the slurry, and then calendering the current collector to form a negative electrode composite layer on both sides of the negative current collector, thereby obtaining a negative electrode.

The compaction density of the negative electrode plate is not particularly limited herein, as long as the objectives of this application can be achieved. For example, the compaction density of the negative electrode plate may be 1.0 g/cm$^3$ to 1.85 g/cm$^3$. The cold-pressing pressure on the negative electrode plate is not particularly limited herein, as long as the objectives of this application can be achieved. For example, the cold-pressing pressure on the negative electrode plate may be 3 tons to 30 tons.

**Electrolyte solution**

The electrolyte solution used in the secondary battery of this application includes an electrolyte and a solvent that dissolves the electrolyte. In some embodiments, the electrolyte solution includes propylene carbonate and ethylene carbonate. Based on a mass of the electrolyte solution, the sum of mass percent of the propylene carbonate and the ethylene carbonate is H%, satisfying: $15 \leq H \leq 50$. In some embodiments, $18 \leq H \leq 44$. In some embodiments, $18 \leq H \leq 39$. In some embodiments, $24 \leq H \leq 44$. In some embodiments, $24 \leq H \leq 39$. In some embodiments, $18 \leq H \leq 24$. In some embodiments, $39 \leq H \leq 44$. In some embodiments, the value of H is 15, 18, 19, 22, 23, 25, 28, 30, 32, 33, 36, 37, 39, 40, 43, 44, 50, or a value falling within a range formed by any two thereof. By adjusting the value of H to fall within the above range, the thickness and composition of the SEI film can be adjusted, thereby reducing the probability of break of the conductive network inside the negative electrode, and further alleviating the resistance growth rate during high-temperature cycling and the resistance growth rate during fast-charge cycling.

In some embodiments, the electrolyte solution includes propyl propionate and ethyl propionate. Based on a mass of the electrolyte solution, a sum of mass percent of the propyl propionate and the ethyl propionate is L%, satisfying: $12 \leq L \leq 39$. In some embodiments, $12 \leq L \leq 34$. In some embodiments, $18 \leq L \leq 39$. In some embodiments, $18 \leq L \leq 34$. In some embodiments, $12 \leq L \leq 18$. In some embodiments, $34 \leq L \leq 39$. In some embodiments, the value of L is 12, 13, 16, 18, 19, 21, 24, 26, 27, 30, 32, 34, 36, 38, 39, or a value falling within a range formed by any two thereof. By adjusting the value of L to fall within the above range, the thickness and composition of the SEI film can be improved, and the connection between the silicon-carbon composite particle and the conductive agent can be strengthened, thereby further alleviating the resistance growth rate during high-temperature cycling and the resistance growth rate during fast-charge cycling of the secondary battery.

In some embodiments, a mass percent of the propyl propionate is $L_1$%, and a mass percent of the ethyl propionate is $L_2$%, satisfying: $1.3 \leq L_1/L_2 \leq 2.8$. In some embodiments, $1.3 \leq L_1/L_2 \leq 2.3$. In some embodiments, $1.7 \leq L_1/L_2 \leq 2.8$. In some embodiments, $1.7 \leq L_1/L_2 \leq 2.3$. In some embodiments, $1.3 \leq L_1/L_2 \leq 1.7$. In some embodiments, $2.3 \leq L_1/L_2 \leq 2.8$. In some embodiments, the value of $L_1/L_2$ is 1.3, 1.4, 1.5, 1.6, 1.7, 1.8, 1.9, 2.0, 2.1, 2.2, 2.3, 2.4, 2.5, 2.6, 2.7, 2.8, or a value falling within a range formed by any two thereof. By adjusting the value of the $L_1/L_2$ ratio to fall within the above range, the uniformity of the SEI film can be improved, thereby further alleviating the resistance growth rate during high-temperature cycling and the resistance growth rate during fast-charge cycling of the secondary battery.

In some embodiments, $4 < L_1 \leq 24$. In some embodiments, $8 \leq L_1 \leq 15$. In some embodiments, $10 \leq L_1 \leq 19$. In some embodiments, $13 \leq L_1 \leq 23$. As an example, the value of $L_1$ is 4, 5, 7, 8, 10, 11, 13, 15, 16, 18, 19, 20, 21, 23, 24, or a value falling within a range formed by any two thereof. By adjusting the value of $L_1$ to fall within the above range, this application can further alleviate the resistance growth rate during high-temperature cycling and the resistance growth rate during fast-charge cycling of the secondary battery.

In some embodiments, $5 \leq L_2 \leq 22$. In some embodiments, $7 \leq L_2 \leq 15$. In some embodiments, $11 \leq L_2 \leq 18$. In some embodiments, $16 \leq L_2 \leq 21$. As an example, the value of $L_2$ is 4, 5, 7, 9, 10, 11, 12, 13, 15, 16, 18, 19, 20, 21, 22, or a value falling within a range formed by any two thereof. By adjusting the value of $L_2$ to fall within the above range, this application can further alleviate the resistance growth rate during high-temperature cycling and the resistance growth rate during fast-charge cycling of the secondary battery.

In some embodiments, a mass percent of the propylene carbonate is $H_1$%, and a mass percent of the ethylene carbonate is $H_2$%, satisfying: $0.9 \leq H_1/H_2 \leq 2.3$. In some embodiments, $0.9 \leq H_1/H_2 \leq 2.0$. In some embodiments, $1.1 \leq H_1/H_2 \leq 2.3$. In some embodiments, $1.1 \leq H_1/H_2 \leq 2.0$. In some embodiments, the value of $H_1/H_2$ is 0.9, 1.0, 1.1, 1.2, 1.3, 1.4, 1.5, 1.6, 1.7, 1.8, 1.9, 2.1, 2.2, 2.3, or a value falling within a range formed by any two thereof. By adjusting the value of $H_1/H_2$ to fall within the above range, the uniformity of the SEI film can be further improved, and the secondary battery can exhibit a lower resistance growth rate during high-temperature cycling and a lower resistance growth rate during fast-charge cycling.

In some embodiments, $6 \leq H_1 \leq 30$. In some embodiments, $8 \leq H_1 \leq 19$. In some embodiments, $15 \leq H_1 \leq 23$. In some embodiments, $20 \leq H_1 \leq 29$. As an example, the value of $H_1$ is 6, 7, 8, 10, 11, 13, 15, 16, 18, 19, 20, 21, 23, 24, 25, 26, 27, 28, 29, 30, or a value falling within a range formed by any two thereof. By adjusting the value of $H_1$ to fall within the above range, this application can further alleviate the resistance growth rate during high-temperature cycling and the resistance growth rate during fast-charge cycling of the secondary battery.

In some embodiments, $5 \leq H_2 \leq 29$. In some embodiments, $11 \leq H_2 \leq 19$. In some embodiments, $15 \leq H_2 \leq 23$. In some embodiments, $18 \leq H_2 \leq 27$. As an example, the value of $H_2$ is 5, 7, 9, 10, 11, 12, 13, 15, 16, 18, 19, 20, 21, 22, 23, 24, 25, 26, 27, 28, 29, or a value falling within a range formed by any two thereof. By adjusting the value of $H_2$ to fall within the above range, this application can further alleviate the resistance growth rate during high-temperature cycling and the resistance growth rate during fast-charge cycling of the secondary battery.

In some embodiments, the electrolyte solution includes 1,3-propane sultone. Based on a mass of the electrolyte solution, a mass percent of the 1,3-propane sultone is P%, satisfying: $2.6 \leq P \leq 4.7$. In some embodiments, $2.6 \leq P \leq 4.2$. In some embodiments, $3.1 \leq P \leq 4.7$. In some embodiments, $3.1 \leq P \leq 4.2$. In some embodiments, $2.6 \leq P \leq 3.1$. In some embodiments, $4.2 \leq P \leq 4.7$. In some embodiments, the value of P is 2.6, 2.7, 2.8, 3.0, 3.2, 3.4, 3.5, 3.7, 3.8, 4.0, 4.2, 4.3, 4.4, 4.6, 4.7, or a value falling within a range formed by any two thereof. By adjusting the value of P to fall within the above range, the resilience of the solid electrolyte interface film and the connectivity to the conductive agent can be improved, thereby further alleviating the resistance growth rate during high-temperature cycling and the resistance growth rate during fast-charge cycling.

In some embodiments, the electrolyte solution includes at least one of fluorobenzene, fluoroethylene carbonate, or lithium difluorophosphate. Based on a mass of the electrolyte solution, the mass percent of the fluorobenzene is $F_1$%, satisfying: $1.1 \leq F_1 \leq 4.3$. In some embodiments, $1.1 \leq F_1 \leq 3.7$. In some embodiments, $2.3 \leq F_1 \leq 4.3$. In some embodiments, $2.3 \leq F_1 \leq 3.7$. In some embodiments, $1.1 \leq F_1 \leq 2.3$. In some embodiments, $3.7 \leq F_1 \leq 4.3$. In some embodiments, the value of $F_1$ is 1.1, 1.3, 1.4, 1.8, 2.1, 2.2, 2.4, 2.6, 2.9, 3.2, 3.4, 3.6, 4.0, 4.2, 4.3, or a value falling within a range formed by any two thereof. By adjusting the value of $F_1$ to fall within the above range, this application can further reduce the probability of break of the conductive network inside the negative electrode, and cause the secondary battery to exhibit a lower resistance growth rate during high-temperature cycling and a lower resistance growth rate during fast-charge cycling.

In some embodiments, $3.4 \leq C/F_1^2 \leq 13.8$. In some embodiments, $3.4 \leq C/F_1^2 \leq 12.8$. In some embodiments, $5.5 \leq C/F_1^2 \leq 13.8$. In some embodiments, $5.5 \leq C/F_1^2 \leq 12.8$. In some embodiments, $7.0 \leq C/F_1^2 \leq 12.8$. In some embodiments, $3.4 \leq C/F_1^2 \leq 5.5$. In some embodiments, the value of $C/F_1^2$ is 3.4, 4.2, 4.8, 5.6, 6.0, 7.1, 7.9, 8.3, 9.5, 10.5, 11.2, 11.6, 12.8, 13.5, 13.8, or a value falling within a range formed by any two thereof. By adjusting the value of $C/F_1^2$ to fall within the above range, this application can further alleviate the resistance growth rate during high-temperature cycling and the resistance growth rate during fast-charge cycling of the secondary battery.

In some embodiments, based on the mass of the electrolyte solution, the mass percent of the fluoroethylene carbonate is $F_2$%, satisfying: $10.3 \leq F_2 \leq 19.8$. In some embodiments, $10.3 \leq F_2 \leq 18.7$. In some embodiments, $14.4 \leq F_2 \leq 19.8$. In some embodiments, $14.4 \leq F_2 \leq 18.7$. In some embodiments, the value of $F_2$ is 10.3, 12.8, 13.0, 13.8, 14.4, 14.7, 15.4, 16.1, 16.5, 17.1, 17.8, 18.5, 19.0, 19.4, 19.8, or a value falling within a range formed by any two thereof. By adjusting the value of $F_2$ to fall within the above range, this application can further reduce the probability of break of the conductive network inside the negative electrode, and cause the secondary battery to exhibit a lower resistance growth rate during high-temperature cycling and a lower resistance growth rate during fast-charge cycling.

In some embodiments, based on the mass of the electrolyte solution, the mass percent of the lithium difluorophosphate is $F_3$%, satisfying: $0.01 \leq F_3 \leq 0.32$. In some embodiments, $0.01 \leq F_3 \leq 0.22$. In some embodiments, $0.12 \leq F_3 \leq 0.32$. In some embodiments, $0.12 \leq F_3 \leq 0.22$. In some embodiments, $0.01 \leq F_3 \leq 0.12$. In some embodiments, $0.22 \leq F_3 \leq 0.32$. In some embodiments, the value of $F_3$ is 0.01, 0.02, 0.05, 0.07, 0.08, 0.12, 0.15, 0.16, 0.20, 0.22, 0.23, 0.25, 0.29, 0.31, 0.32, or a value falling within a range formed by any two thereof. By adjusting the value of $F_3$ to fall within the above range, this application can further reduce the probability of break of the conductive network inside the negative electrode, and cause the secondary battery to exhibit a lower resistance growth rate during high-temperature cycling and a lower resistance growth rate during fast-charge cycling.

In some embodiments, the electrolyte solution includes dimethyl sulfone. Based on a mass of the electrolyte solution, a mass percent of the dimethyl sulfone is S%, satisfying: $1.1 \leq S \leq 3.4$. In some embodiments, $1.1 \leq S \leq 2.7$. In

some embodiments, $2.7 \leq S \leq 3.4$. In some embodiments, the value of S is 1.1, 1.2, 1.4, 1.5, 1.7, 1.8, 1.9, 2.2, 2.5, 2.6, 2.7, 2.9, 3.1, 3.4, or a value falling within a range formed by any two thereof. By adjusting the value of S to fall within the above range, the probability of irreversible displacement of the conductive agent during volume expansion and shrinkage of the silicon-carbon composite particles can be reduced, thereby further alleviating the resistance growth rate during high-temperature cycling and the resistance growth rate during fast-charge cycling.

In some embodiments, the electrolyte solution includes 1,4-dioxane. Based on a mass of the electrolyte solution, a mass percent of the 1,4-dioxane is W%, satisfying: $2.3 \leq W \leq 4.6$. In some embodiments, $2.3 \leq W \leq 3.2$. In some embodiments, $3.2 \leq W \leq 4.6$. In some embodiments, the value of W is 2.3, 2.6, 2.7, 2.9, 3.0, 3.3, 3.4, 3.6, 3.7, 3.9, 4.2, 4.3, 4.5, 4.6, or a value falling within a range formed by any two thereof. By adjusting the value of W to fall within the above range, the connection between the silicon-carbon composite particle and the conductive agent can be strengthened, thereby further alleviating the resistance growth rate during high-temperature cycling and the resistance growth rate during fast-charge cycling.

The type of the nonaqueous solvent is not particularly limited herein, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound or a cyclic carbonate compound. The chain carbonate compound may include, but is not limited to, at least one of dimethyl carbonate, diethyl carbonate, dipropyl carbonate, methyl propyl carbonate, ethylene propyl carbonate, or ethyl methyl carbonate. The cyclic carbonate compound may include, but is not limited to, at least one of ethylene carbonate, propylene carbonate, butylene carbonate, or vinyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, or caprolactone. The ether compound may include, but is not limited to, at least one of ethylene glycol dimethyl ether, dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

In some embodiments, the electrolyte is not particularly limited, and may be any substance well-known for use as an electrolyte. The mass percent of the electrolyte is not particularly limited as long as effects of this application are not impaired.

## Positive electrode

The positive electrode includes a positive current collector and a positive electrode composite layer disposed on a surface of the positive current collector.

The positive electrode composite layer contains a positive active material. The positive electrode composite layer may be a single layer or a plurality of layers. Each of the plurality of layers of positive active material may contain the same or a different positive active material. The positive active material is a substance that enables reversible intercalation and deintercalation of alkali metal ions.

The positive active material includes a lithium transition metal oxide containing nickel and other transition metals. In the lithium transition metal oxide containing nickel and other transition metals, the molar percent of nickel relative to the total number of moles of the transition metal may be 60 mol% or more, for example, 75 mol% or more, for example, 80 mol% or more, for example, 85 mol% or more, or, for example, 90 mol% or more.

For example, the lithium transition metal oxide may be a compound represented by the following Formula $\alpha$:

$$\text{Formula } \alpha: \qquad Li_aNi_xCo_yM_zO_{2-b}A_b.$$

In Formula $\alpha$, $0.9 \leq a \leq 1.2$, $0 \leq b \leq 0.2$, $0.6 \leq x < 1$, $0 < y \leq 0.3$, $0 < z \leq 0.3$, and $x + y + z = 1$, M is at least one selected from manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), or boron (B), and A is F, S, Cl, Br, or a combination thereof. For example, the above subscripts may be: $0.7 \leq x < 1$, $0 < y \leq 0.3$, and $0 < z \leq 0.3$; $0.8 \leq x < 1$, $0 < y \leq 0.3$, and $0 < z \leq 0.3$; $0.8 \leq x < 1$, $0 < y \leq 0.2$, and $0 < z \leq 0.2$; $0.83 \leq x < 0.97$, $0 < y \leq 0.15$, and $0 < z \leq 0.15$; or, $0.85 \leq x < 0.95$, $0 < y \leq 0.1$, and $0 < z \leq 0.1$.

For example, the lithium transition metal oxide may be at least one compound represented by the following Formula $\beta$ or Formula $\gamma$:

$$\text{Formula } \beta: \qquad LiNi_xCo_yMn_zO_2; \text{ or}$$

Formula $\gamma$: $\quad\quad\quad$ $LiNi_xCo_yAl_zO_2$.

In Formula $\beta$, $0.6 \leq x \leq 0.95$, $0 < y \leq 0.2$, and $0 < z \leq 0.1$, for example, $0.7 \leq x \leq 0.95$, $0 < y \leq 0.3$, and $0 < z \leq 0.3$.

In Formula $\gamma$, $0.6 \leq x \leq 0.95$, $0 < y \leq 0.2$, and $0 < z \leq 0.1$, for example, $0.7 \leq x \leq 0.95$, $0 < y \leq 0.3$, and $0 < z \leq 0.3$; for example, $0.8 \leq x \leq 0.95$, $0 < y \leq 0.3$, and $0 < z \leq 0.3$; for example, $0.82 \leq x \leq 0.95$, $0 < y \leq 0.15$, and $0 < z \leq 0.15$; for example, $0.85 \leq x \leq 0.95$, $0 < y \leq 0.1$, and $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, or $LiNi_{0.88}Co_{0.1}Al_{0.02}O_2$.

According to another embodiment, the positive active material includes at least one active material selected from the group consisting of Li-Ni-Co-Al (NCA), Li-Ni-Co-Mn (NCM), lithium cobalt oxide ($LiCoO_2$), lithium manganese oxide ($LiMnO_2$), lithium nickel oxide ($LiNiO_2$), and lithium iron phosphate ($LiFePO_4$).

In some embodiments, the positive electrode composite layer includes a positive conductive material. The type of the positive conductive material is not limited, and may be any known conductive material. Examples of the positive conductive material may include, but are not limited to, carbon black such as acetylene black and Super P; materials such as amorphous carbon (for example, needle coke); carbon nanotubes; graphene, and the like. The foregoing positive conductive materials may be used alone or combined arbitrarily.

The type of the positive binder used in manufacturing the positive electrode composite layer is not particularly limited in type. In a case that the binder is applied in a coating manner, any binder material may be used as the positive binder as long as the material is soluble or dispersible in a liquid medium when being used in preparing an electrode. Examples of the positive binder may include, but are not limited to, one or more of: resin polymers such as polyethylene, polypropylene, polyethylene terephthalate, polymethyl methacrylate, polyimide, aramid, cellulose, and nitrocellulose; rubber polymers such as styrene butadiene rubber (SBR), nitrile butadiene rubber (NBR), fluorine rubber, isoprene rubber, polybutadiene rubber, and ethylene-propylene rubber; thermoplastic elastomer polymers such as a styrene-butadiene-styrene block copolymer or a hydrogenated product thereof, an ethylene-propylene-diene terpolymer (EPDM), a styrene-ethylene-butadiene-ethylene copolymer, a styrene-isoprene-styrene block copolymer or a hydrogenated product thereof; soft resinous polymers such as syndiotactic-1,2-polybutadiene, polyvinyl acetate, an ethylene-vinyl acetate copolymer, a propylene-$\alpha$-olefin copolymer; fluorine-based polymers such as polyvinylidene difluoride (PVDF), polytetrafluoroethylene, fluorinated polyvinylidene difluoride, and a polytetrafluoroethylene-ethylene copolymer; and ion-conductive polymer composites containing alkali metal ions (especially lithium ions). The foregoing positive binders may be used alone or combined arbitrarily.

The solvent used to form a positive electrode slurry is not limited in type, and any solvent is appropriate as long as it can dissolve or disperse the positive active material, the conductive material, the positive binder, and a thickener used as needed. Examples of the solvent used to form the positive electrode slurry may include any one of an aqueous solvent or an organic solvent. Examples of the aqueous medium solvent may include, but are not limited to, a mixed medium of alcohol and water, water, or the like. Examples of the organic media solvent include, but are not limited to, aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine, and N,N-dimethylaminopropylamine; ethers such as diethyl ether, propylene oxide, and tetrahydrofuran (THF); amides such as N-methylpyrrolidone (NMP), dimethylformamide, and dimethylacetamide; and aprotic polar solvents such as hexamethylphosphoramide, and dimethylsulfoxide.

A thickener is usually used to adjust viscosity of a slurry. In a case that an aqueous medium is used, a thickener and a styrene butadiene rubber (SBR) emulsion may be added to make a slurry. The thickener is not particularly limited in type. Examples of the thickener may include, but are not limited to, carboxymethyl cellulose, methyl cellulose, hydroxymethyl cellulose, ethyl cellulose, polyvinyl alcohol, oxidized starch, phosphorylated starch, casein, and a salt thereof, and the like. The foregoing thickeners may be used alone or combined arbitrarily.

The type of the positive current collector is not particularly limited herein, and may be made of any material known as suitable for use in a positive current collector. Examples of the positive current collector may include, but are not limited to, metal materials such as aluminum, stainless steel, nickel plating, titanium, and tantalum; and materials such as carbon cloth and carbon paper. In some embodiments, the positive current collector is made of a metal material. In some embodiments, the positive current collector is made of aluminum.

To reduce an electronic contact resistance of the positive current collector and the positive electrode composite layer, a conductive agent or a conductive coating may be contained on a surface of the positive current collector. Examples of the conductive agent may include, but are not limited to, carbon and noble metals such as gold, platinum, and silver. Examples of the conductive coating may include a mixture layer containing an inorganic oxide, a conductive agent, and a binder.

A positive electrode may be prepared by forming a positive electrode composite layer on a current collector, where the positive electrode composite layer contains a positive active material and a binder. The positive electrode that contains a positive active material may be prepared by a conventional method. To be specific, the method may include: dry-mixing a positive active material, a binder, and, as appropriate, a conductive material and a thickener and the like, so as to form a sheet; and crimping the obtained sheet onto the positive current collector; or dissolving or dispersing such materials into a liquid medium to form a slurry, coating the positive current collector with the slurry, and drying to form a positive electrode composite layer on the current collector, thereby obtaining a positive electrode.

**Separator**

To prevent short circuits, a separator is generally disposed between the positive electrode and the negative electrode. In this case, the electrolyte solution of this application generally works by penetrating into the separator.

The material and shape of the separator are not particularly limited as long as they do not significantly impair the effects of this application. The material of the separator may be resin, glass fiber, an inorganic compound, or the like that is stable to the electrolyte solution of this application. In some embodiments, the separator contains a highly liquid-retaining porous sheet or non-woven fabric shaped substance, and the like. Examples of resin or glass fiber used as the separator may include, but are not limited to, polyolefin, aramid, polytetrafluoroethylene, polyethersulfone, and the like. In some embodiments, the polyolefin is polyethylene or polypropylene. In some embodiments, the polyolefin is polypropylene. The foregoing separator materials may be used alone or combined arbitrarily.

The separator may also be made of a material that is formed by stacking the foregoing materials. Examples of such material include, but are not limited to, a three-layer separator formed by sequentially stacking polypropylene, polyethylene, and polypropylene.

Examples of the inorganic compound used as the material of the separator may include, but are not limited to, an oxide such as aluminum oxide and silicon dioxide; a nitride such as aluminum nitride and silicon nitride; and a sulfate salt (such as barium sulfate and calcium sulfate). The shape of the inorganic compound may include, but is not limited to a particle or fiber shape.

The form of the separator may be a thin film form. Examples include, but are not limited to, a non-woven fabric, a woven fabric, a microporous film, and the like. In a case that the separator is in a thin film form, a pore size of the separator is 0.01 $\mu$m to 1 $\mu$m, and a thickness of the separator is 5 $\mu$m to 50 $\mu$m. Other than the stand-alone separator described above, a separator made in the following way is also applicable: a separator made by forming a composite porous layer on the surface of the positive electrode and/or the negative electrode by using a resinous binder, where the composite porous layer contains the foregoing inorganic particles. For example, the separator is made by using a fluororesin as a binder so that aluminum oxide particles with a volume median diameter Dv90 less than 1 $\mu$m form a porous layer on both sides of the positive electrode.

The thickness of the separator is arbitrary. In some embodiments, the thickness of the separator is greater than 1 $\mu$m, greater than 5 $\mu$m, or greater than 8 $\mu$m. In some embodiments, the thickness of the separator is less than 50 $\mu$m, less than 40 $\mu$m, or less than 30 $\mu$m. When the thickness of the separator falls within the foregoing ranges, high insulation and mechanical strength of the separator are ensured, and high C-rate performance and energy density of the secondary battery are ensured.

In addition, this application provides an electronic device. The electronic device includes the secondary battery according to this application.

The uses of the secondary battery according to this application are not particularly limited, and the secondary battery may be used in any electronic device known in the prior art. In some embodiments, the secondary battery of this application is applicable to, but not limited to use in, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

**Embodiments**

Using a lithium-ion battery as an example, the following describes the implementations of the secondary battery of this application in more detail with reference to embodiments and comparative embodiments. A person skilled in the art understands that the preparation methods described in this application are merely exemplary, and any other appropriate preparation methods still fall within the scope of this application. Various tests and evaluations are performed by the following methods. In addition, unless otherwise specified, the word "parts" means parts by mass, and the symbol "%" means a percentage by mass.

**Test methods**

**Resistance growth rate after high-temperature (45 °C) cycling**

(1) Testing an initial resistance: Placing a lithium-ion battery into a charger-discharger device at a room temperature (25 °C), performing constant-current charging at 0.33C until the voltage reaches 4.45 V, and then performing constant-voltage charging until the current drops to 0.05C, whereupon the charging is cut off. Discharging the battery at a constant current of 0.33C until the voltage reaches 3.0 V. Subsequently, performing charging for 3 times and performing discharging for 3 times according to the above charge and discharge process, and setting the state of charge (SOC) of the battery to 50%SOC based on the last discharge capacity. Afterward, measuring the direct-current internal resistance (by using a PNE-0506 charger-discharger device) by use of a voltage drop displayed when a discharge pulse is applied at 5 A (2.5C) for 10 seconds, and defining the resistance at this time as an initial resistance.
(2) High-temperature cycling: Moving the lithium-ion battery with a determined initial resistance to a high-temperature (45 °C) environment, determining that the above charge and discharge process is 1 cycle, and repeating the above charge and discharge steps for a total of 200 cycles.
(3) Resistance after high-temperature cycling: Moving the lithium-ion battery into a charger-discharger device at a room temperature, and setting the SOC is set to 50%SOC. Afterward, measuring the resistance at the end of 200 cycles by using a PNE-0506 charger-discharger device by use of a voltage drop displayed when a discharge pulse is applied at 5 A (2.5C) for 10 seconds.
(4) Calculating the resistance growth rate $R_1$ after high-temperature (45 °C) cycling

Resistance growth rate $R_1$ after high-temperature (45 °C) cycling (%) = {(resistance at the end of 200 cycles - initial resistance)/initial resistance} $\times$ 100

**Resistance growth rate after fast-charge (at 5C) cycling**

(1) Testing an initial resistance: Moving a lithium-ion battery into a charger-discharger device at a room temperature (25 °C), performing constant-current charging at 0.33C until the voltage reaches 4.45 V, and then performing constant-voltage charging until the current drops to 0.05C, whereupon the charging is cut off. Discharging the battery at a constant current of 0.33C until the voltage reaches 3.0 V. Subsequently, performing charging and discharging for 3 times separately, and setting the state of charge (SOC) of the battery to 50%SOC based on the last discharge capacity. Afterward, measuring the direct-current internal resistance (by using a PNE-0506 charger-discharger device) by use of a voltage drop displayed when a discharge pulse is applied at 5 A (2.5C) for 10 seconds, and defining the resistance at this time as an initial resistance.
(2) Fast-charge cycling: Charging the lithium-ion battery at a constant current of 5C until the voltage reaches 4.45 V, and then charging the battery at a constant voltage of 4.45 V until the current drops to 0.05 C. Leaving the battery to stand for 10 min, and then discharging the battery at a constant current of 1C until a cut-off voltage of 3.0 V. Determining that the above charge and discharge process is 1 cycle, and repeating the above charge and discharge steps for a total of 200 cycles.
(3) Resistance after fast-charge cycling: Setting the SOC to 50%SOC. Afterward, measuring the resistance at the end of 200 cycles by using a PNE-0506 charger-discharger device by use of a voltage drop displayed when a discharge pulse is applied at 5 A (2.5C) for 10 seconds.
(4) Calculating the resistance growth rate $R_2$ after fast-charge (at 5C) cycling

Resistance growth rate $R_2$ after fast-charge (at 5C) cycling (%) = {(resistance at the end of 200 cycles - initial resistance)/initial resistance} $\times$ 100

**Energy density (ED)**

Leaving the lithium-ion battery in each embodiment and each comparative embodiment to stand in a thermostat at 25 °C$\pm$1 °C for 30 minutes, charging the battery at a constant current of 0.5C until the voltage reaches 4.25 V, and then charging the battery at a constant voltage of 4.25 V until the current drops to 0.025C. Leaving the battery to stand for 5 minutes, and then discharging the battery at 0.5C until the voltage drops to 3.0 V. Recording the discharge energy E mAh of the lithium-ion battery, and testing the length, width, and height of the battery at a 50% SOC (after the lithium-ion battery is charged at a constant current of 0.5C until the voltage reaches 3.95 V) to determine the volume V cm$^3$ of the battery, and calculating the energy density as: ED = E/V.

Mass percent of silicon (C)

Cutting the negative electrode plate into 1 cm×1 cm sheets in size, and then polishing the cut surface of the negative electrode plate by use of argon ion beam cross-section polishing (CP) technology to obtain a CP specimen.

Selecting a silicon-carbon composite particle in the CP specimen, and cutting the particle into slices by use of a focused ion beam (FIB) to obtain FIB specimen.

Performing energy dispersive X-ray spectroscopy on the FIB specimen. Specifically, randomly selecting a 1 $\mu$m×1 $\mu$m region at the center of the silicon-carbon composite particle, and performing surface scanning on the region. Measuring the mass percent (wt%) of silicon and carbon, and calculating the mass percent of silicon. The center of the silicon-carbon composite particle is a region at a distance of greater than 1 $\mu$m away from the surface of the silicon-carbon composite particle.

**Average particle diameter (D) of the silicon-carbon composite particles**

Cutting the negative electrode plate into 1 cm×1 cm sheets in size, and then polishing the cut surface of the negative electrode plate by use of argon ion beam cross-section polishing (CP) technology to obtain a CP specimen.

Selecting a silicon-carbon composite particle in the CP specimen, counting the cross-sectional area of the silicon-carbon composite particle, and recording the cross-sectional area as S. Calculating R according to the formula $S = \pi \times R^2$. The particle diameter of the silicon-carbon composite particles is 2R.

Selecting a total of 20 silicon-carbon composite particles randomly, calculating the arithmetic mean of the particle diameters of the 20 silicon-carbon composite particles, and recording the arithmetic mean as the average particle diameter D of the silicon-carbon composite particles.

**Embodiment 1-1**

**<Preparing a negative electrode>**

**Preparing silicon-carbon composite particles:**

Placing resin carbon as a carbon precursor into a rotary kiln, passing a mixed gas of silane and argon into the kiln, and performing vapor deposition at a deposition temperature of 550 °C for 6.5 hours to obtain silicon-carbon composite particles, where the volume ratio of silane to argon is 3: 7.

**Preparing a negative electrode plate:**

Mixing silicon-carbon composite particles and artificial graphite evenly at a mass ratio of 12: 88, and using the mixture as a negative active material. Mixing the negative active material, styrene-butadiene rubber (SBR), polyacrylic acid (PAA), carbon nanotubes (CNT), and carboxymethyl cellulose (CMC) at a mass ratio of 95.8: 2.4: 0.5: 0.5: 0.8, and then adding deionized water as a solvent, and stirring well to obtain a negative electrode slurry in which the solid content is 45 wt%. Coating one surface of a 6 $\mu$m-thick negative current collector copper foil with the negative electrode slurry evenly, and oven-drying the current collector to obtain a negative electrode plate coated with a negative electrode composite layer on a single side. Repeating the above steps on the other surface of the negative current collector copper foil to obtain a negative electrode plate coated with the negative electrode composite layer on both sides. Performing cold-pressing, cutting, slitting, and drying to obtain a negative electrode plate of 76.6 mm × 875 mm in size.

**<Preparing a positive electrode>**

Mixing lithium cobalt oxide as a positive active material, conductive carbon black as a conductive agent, and polyvinylidene difluoride (PVDF) at a mass ratio of 95: 2: 3, adding N-methyl-pyrrolidone (NMP), and stirring the mixture well with a vacuum mixer to obtain a positive electrode slurry in which the solid content is 70 wt%. Coating one surface of a 9 $\mu$m-thick positive current collector aluminum foil with the positive electrode slurry evenly, and oven-drying the current collector to obtain a positive electrode plate coated with a positive electrode composite layer on a single side. Repeating the above steps on the other surface of the positive current collector aluminum foil to obtain a positive electrode plate coated with the positive electrode composite layer on both sides. Performing cold-pressing, cutting, slitting, and drying to obtain a positive electrode plate of 74 mm × 867 mm in size.

**<Preparing an electrolyte solution>**

Dissolving lithium hexafluorophosphate ($LiPF_6$) in a mixed solution containing propyl propionate, ethyl propionate, ethylene carbonate, propylene carbonate, and diethyl carbonate (DEC) in a dry argon atmosphere glovebox. Based on the mass of the electrolyte solution, the mass percent of $LiPF_6$ is 12.5%, and the mass percent of other substances is shown in Table 1, where the mass percent of propyl propionate is $L_1$%, the mass percent of ethyl propionate is $L_2$%, the mass percent of propylene carbonate is $H_1$%, the mass percent of ethylene carbonate is $H_2$%, and the remainder is DEC.

**<Separator>**

Using a 15 μm-thick porous polyethylene film (manufactured by Celgard) as a separator.

**<Preparing a lithium-ion battery>**

Connecting the above-prepared positive electrode and negative electrode to tabs respectively. Stacking the positive electrode, the separator, and the negative electrode together to form a stacked structure. Subsequently, putting the stacked structure together with an electrolyte solution into an aluminum laminated housing. Heat-sealing the opening of the housing, and performing steps such as chemical formation and degassing to make a lithium-ion battery.

**Embodiments 1-2 to 1-31 and Comparative Embodiments 1 to 3**

Identical to Embodiment 1-1 except that the parameters are adjusted according to Table 1. By adjusting the duration of vapor deposition in preparing silicon-carbon composite particles, the mass percent C% of silicon is caused to reach the value shown in Table 1. By crushing and ball-milling the silicon-based particles, the average particle diameter D μm of the silicon-based particles is caused to reach the value shown in Table 1. The negative electrode composite layer in Comparative Embodiment 3 contains no silicon-carbon composite particles, and the negative active material is artificial graphite particles.

# Table 1

| | D (μm) | C (%) | C/D² | L₁ (%) | L₂ (%) | L (%) | L₁ /L₂ | H₁ (%) | H₂ (%) | H (%) | H₁/H₂ | R₁ (%) | R₂ (%) | ED (mAh/cm³) |
|---|---|---|---|---|---|---|---|---|---|---|---|---|---|---|
| Comparative Embodiment 1 | 7.1 | 65 | 1.29 | 5 | 5 | 10 | 1.0 | 30 | 20 | 50 | 1.5 | 23.5 | 29.4 | 704.6 |
| Comparative Embodiment 2 | 11.1 | 20 | 0.16 | 5 | 5 | 10 | 1.0 | 30 | 20 | 50 | 1.5 | 25.4 | 26.3 | 704.5 |
| Comparative Embodiment 3 | \ | \ | \ | 5 | 5 | 10 | 1.0 | 30 | 20 | 50 | 1.5 | 19.8 | 22.9 | 668.5 |
| Embodiment 1-1 | 10.9 | 25 | 0.21 | 5 | 5 | 10 | 1.0 | 30 | 20 | 50 | 1.5 | 19.7 | 23.0 | 704.8 |
| Embodiment 1-2 | 9.2 | 33 | 0.39 | 5 | 5 | 10 | 1.0 | 30 | 20 | 50 | 1.5 | 18.4 | 21.8 | 704.8 |
| Embodiment 1-3 | 8.8 | 45 | 0.58 | 5 | 5 | 10 | 1.0 | 30 | 20 | 50 | 1.5 | 17.6 | 20.7 | 704.9 |
| Embodiment 1-4 | 7.4 | 48 | 0.88 | 5 | 5 | 10 | 1.0 | 30 | 20 | 50 | 1.5 | 17.2 | 21.1 | 704.8 |
| Embodiment 1-5 | 7.5 | 54 | 0.96 | 5 | 5 | 10 | 1.0 | 30 | 20 | 50 | 1.5 | 18.6 | 21.6 | 704.8 |
| Embodiment 1-6 | 7.1 | 59 | 1.17 | 5 | 5 | 10 | 1.0 | 30 | 20 | 50 | 1.5 | 19.8 | 22.8 | 704.9 |
| Embodiment 1-7 | 8.4 | 45 | 0.64 | 4 | 5 | 9 | 0.8 | 10 | 5 | 15 | 2.0 | 17.3 | 20.6 | 714.2 |
| Embodiment 1-8 | 8.4 | 45 | 0.64 | 5 | 7 | 12 | 0.7 | 10 | 5 | 15 | 2.0 | 16.7 | 19.7 | 714.3 |
| Embodiment 1-9 | 8.5 | 51 | 0.71 | 8 | 10 | 18 | 0.8 | 10 | 5 | 15 | 2.0 | 15.5 | 18.0 | 714.3 |
| Embodiment 1-10 | 8.5 | 54 | 0.75 | 15 | 19 | 34 | 0.8 | 10 | 5 | 15 | 2.0 | 15.3 | 18.4 | 714.2 |
| Embodiment 1-11 | 8.4 | 48 | 0.68 | 18 | 21 | 39 | 0.9 | 10 | 5 | 15 | 2.0 | 16.3 | 18.9 | 714.2 |
| Embodiment 1-12 | 8.4 | 42 | 0.60 | 20 | 22 | 42 | 0.9 | 10 | 5 | 15 | 2.0 | 17.5 | 20.1 | 714.1 |
| Embodiment 1-13 | 8.8 | 48 | 0.62 | 11 | 9 | 20 | 1.2 | 6 | 9 | 16 | 0.7 | 15.2 | 17.5 | 714.2 |
| Embodiment 1-14 | 8.8 | 55 | 0.71 | 11 | 9 | 20 | 1.2 | 7 | 11 | 18 | 0.6 | 14.3 | 16.4 | 714.1 |
| Embodiment 1-15 | 8.8 | 48 | 0.62 | 11 | 9 | 20 | 1.2 | 9 | 15 | 24 | 0.6 | 13.4 | 15.3 | 714.2 |
| Embodiment 1-16 | 8.6 | 52 | 0.70 | 11 | 9 | 20 | 1.2 | 14 | 25 | 39 | 0.6 | 13.1 | 15.0 | 714.2 |
| Embodiment 1-17 | 8.8 | 48 | 0.62 | 11 | 9 | 20 | 1.2 | 16 | 28 | 44 | 0.6 | 13.7 | 16.8 | 714.1 |
| Embodiment 1-18 | 8.6 | 43 | 0.58 | 11 | 9 | 20 | 1.2 | 18 | 29 | 47 | 0.6 | 15.0 | 18.2 | 714.2 |
| Embodiment 1-19 | 8.1 | 46 | 0.70 | 15 | 15 | 30 | 1.0 | 22 | 8 | 35 | 2.8 | 12.9 | 16.1 | 714.2 |
| Embodiment 1-20 | 7.8 | 46 | 0.76 | 17 | 13 | 30 | 1.3 | 22 | 8 | 35 | 2.8 | 12.1 | 14.0 | 714.1 |
| Embodiment 1-21 | 8.1 | 46 | 0.70 | 19 | 11 | 30 | 1.7 | 22 | 8 | 35 | 2.8 | 11.3 | 12.5 | 714.2 |

| | D (μm) | C (%) | C/D² | L₁ (%) | L₂ (%) | L (%) | L₁/L₂ | H₁ (%) | H₂ (%) | H (%) | H₁/H₂ | R₁ (%) | R₂ (%) | ED (mAh/cm³) |
|---|---|---|---|---|---|---|---|---|---|---|---|---|---|---|
| Embodiment 1-22 | 8.5 | 46 | 0.64 | 21 | 9 | 30 | 2.3 | 22 | 8 | 35 | 2.8 | 11.1 | 12.9 | 714.1 |
| Embodiment 1-23 | 8.1 | 46 | 0.70 | 22 | 8 | 30 | 2.8 | 22 | 8 | 35 | 2.8 | 12.3 | 13.8 | 714.2 |
| Embodiment 1-24 | 8.1 | 46 | 0.70 | 24 | 6 | 30 | 4.0 | 22 | 8 | 35 | 2.8 | 13.0 | 15.2 | 714.3 |
| Embodiment 1-25 | 8.1 | 50 | 0.76 | 16 | 7 | 23 | 2.3 | 8 | 22 | 30 | 0.4 | 11.4 | 13.1 | 714.3 |
| Embodiment 1-26 | 8.8 | 50 | 0.65 | 16 | 7 | 23 | 2.3 | 14 | 16 | 30 | 0.9 | 10.5 | 11.6 | 714.2 |
| Embodiment 1-27 | 8.1 | 50 | 0.76 | 16 | 7 | 23 | 2.3 | 16 | 14 | 30 | 1.1 | 9.6 | 9.7 | 714.2 |
| Embodiment 1-28 | 8.2 | 50 | 0.74 | 16 | 7 | 23 | 2.3 | 20 | 10 | 30 | 2.0 | 9.0 | 10.3 | 714.2 |
| Embodiment 1-29 | 8.1 | 50 | 0.76 | 16 | 7 | 23 | 2.3 | 21 | 9 | 30 | 2.3 | 10.3 | 11.2 | 714.3 |
| Embodiment 1-30 | 8.8 | 47 | 0.61 | 16 | 7 | 23 | 2.3 | 22 | 8 | 30 | 2.8 | 11.5 | 12.7 | 714.2 |
| Embodiment 1-31 | 8.1 | 50 | 0.76 | 12 | 11 | 23 | 1.1 | 20 | 16 | 30 | 1.3 | 11.6 | 12.5 | 714.1 |

As can be seen from Table 1, in the secondary battery of this application, by controlling the average particle diameter D μm of the silicon-carbon composite particles and the value of C in the mass percent C% of silicon to satisfy $0.21 \leq C/D^2 \leq 1.2$, this application can adjust the coordination relationship between the movable space of the conductive agent and the degree and speed of volume expansion and shrinkage of the silicon-carbon composite particles, thereby alleviating the resistance growth rate during high-temperature cycling and the resistance growth rate during fast-charge cycling when achieving a relatively high energy density of the secondary battery at the same time. By adjusting the value of $C/D^2$ to satisfy $0.39 \leq C/D_2 \leq 0.96$, the resistance growth rate during high-temperature cycling and the resistance growth rate during fast-charge cycling can be further alleviated. Particularly, when the value of $C/D^2$ is adjusted to satisfy $0.58 \leq C/D^2 \leq 0.88$, the resistance growth rate during high-temperature cycling and the resistance growth rate during fast-charge cycling of the secondary battery can be alleviated more significantly. Especially, by adjusting the value of D and/or C to satisfy $7.1 \leq D \leq 10.9$ and/or $25 \leq C \leq 59$, the resistance growth rate during high-temperature cycling and the resistance growth rate during fast-charge cycling of the secondary battery can be further alleviated.

Especially, when the value of H in the sum of mass percent H% of propylene carbonate and ethylene carbonate in the electrolyte solution is adjusted to satisfy $15 \leq H \leq 50$, and when this adjustment coordinates with an appropriate average particle diameter of the silicon-carbon composite particles in the negative electrode and an appropriate mass percent of silicon, the resistance growth rate during high-temperature cycling and the resistance growth rate during fast-charge cycling of the secondary battery of the secondary battery can be alleviated significantly. Especially, when the L value in the sum of mass percent L% of propyl propionate and ethyl propionate in the electrolyte solution is adjusted to satisfy $12 \leq L \leq 39$, and/or, the value of H in the sum of the mass percent H% of propylene carbonate and ethylene carbonate in the electrolyte solution is adjusted to satisfy $18 \leq H \leq 44$, the thickness and composition of the SEI film can be adjusted. This adjustment can coordinate with the silicon-based composite particles and the conductive agent to further alleviate the resistance growth rate during high-temperature cycling and the resistance growth rate during fast-charge cycling. Especially, when the value of L is adjusted to fall within the range of $18 \leq L \leq 34$, and/or, the value of H is adjusted to fall within the range of $24 \leq H \leq 39$, the resistance growth rate during high-temperature cycling and the resistance growth rate during fast-charge cycling of the secondary battery can be alleviated more significantly.

Especially, when the value of $L_1/L_2$ in the mass percent $L_1$% of propyl propionate and the mass percent $L_2$% of ethyl propionate in the electrolyte solution is adjusted to satisfy $1.3 \leq L_1/L_2 \leq 2.8$, the resistance growth rate during high-temperature cycling and the resistance growth rate during fast-charge cycling can be further alleviated. Furthermore, by adjusting the value of $H_1/H_2$ in the mass percent $H_1$% of propylene carbonate and the mass percent $H_2$% of ethylene carbonate in the electrolyte solution to satisfy $0.9 \leq H_1/H_2 \leq 2.3$, the secondary battery can exhibit a lower resistance growth rate during high-temperature cycling and a lower resistance growth rate during fast-charge cycling.

### Embodiments 2-1 to 2-32

Identical to Embodiment 1-27 except that the mass percent P% of 1,3-propane sultone, the mass percent $F_1$% of fluorobenzene, the mass percent $F_2$% of fluoroethylene carbonate, the mass percent $F_3$% of lithium difluorophosphate, and/or the mass percent S% of dimethyl sulfone are adjusted according to the parameter values in Table 2. The mass percent of DEC is adjusted according to the mass percent of the above constituents.

**Table 2**

| | P (%) | $F_1$ (%) | $F_2$ (%) | $F_3$ (%) | S (%) | W (%) | $R_1$ (%) | $R_2$ (%) | ED (mAh/cm$^3$) |
|---|---|---|---|---|---|---|---|---|---|
| Embodiment 1-27 | \ | \ | \ | \ | \ | \ | 9.6 | 9.7 | 714.2 |
| Embodiment 2-1 | 2.1 | 0.5 | 9.5 | \ | \ | \ | 9.6 | 9.6 | 714.3 |
| Embodiment 2-2 | 2.6 | 0.5 | 9.5 | \ | \ | \ | 8.3 | 8.9 | 714.4 |
| Embodiment 2-3 | 3.1 | 0.5 | 9.5 | \ | \ | \ | 7.8 | 8.0 | 714.4 |
| Embodiment 2-4 | 4.2 | 0.5 | 9.5 | \ | \ | \ | 7.7 | 7.9 | 714.3 |
| Embodiment 2-5 | 4.7 | 0.5 | 9.5 | \ | \ | \ | 8.8 | 9.0 | 714.3 |
| Embodiment 2-6 | 5.0 | 0.5 | 9.5 | \ | \ | \ | 9.4 | 9.7 | 714.5 |
| Embodiment 2-7 | 2.1 | 1.1 | 9.5 | \ | \ | \ | 8.5 | 8.7 | 714.3 |
| Embodiment 2-8 | 2.1 | 2.3 | 9.5 | \ | \ | \ | 7.5 | 7.1 | 714.5 |
| Embodiment 2-9 | 2.1 | 3.7 | 9.5 | \ | \ | \ | 7.7 | 7.2 | 714.4 |
| Embodiment 2-10 | 2.1 | 4.3 | 9.5 | \ | \ | \ | 8.4 | 8.5 | 714.3 |
| Embodiment 2-11 | 2.1 | 4.7 | 9.5 | \ | \ | \ | 9.3 | 9.5 | 714.4 |
| Embodiment 2-12 | 2.1 | 3.7 | 10.3 | \ | \ | \ | 7.1 | 6.3 | 714.3 |
| Embodiment 2-13 | 2.1 | 3.7 | 12.4 | \ | \ | \ | 6.4 | 5.4 | 714.3 |
| Embodiment 2-14 | 2.1 | 3.7 | 18.7 | \ | \ | \ | 6.3 | 5.3 | 714.5 |
| Embodiment 2-15 | 2.1 | 3.7 | 19.8 | \ | \ | \ | 6.7 | 6.7 | 714.3 |
| Embodiment 2-16 | 2.1 | 3.7 | 21.0 | \ | \ | \ | 7.4 | 7.2 | 714.3 |
| Embodiment 2-17 | 2.1 | 3.5 | 16.7 | 0.01 | \ | \ | 5.5 | 4.8 | 714.4 |
| Embodiment 2-18 | 2.1 | 3.5 | 16.7 | 0.12 | \ | \ | 4.7 | 4.0 | 714.3 |
| Embodiment 2-19 | 2.1 | 3.5 | 16.7 | 0.22 | \ | \ | 4.3 | 4.2 | 714.4 |
| Embodiment 2-20 | 2.1 | 3.5 | 16.7 | 0.32 | \ | \ | 5.4 | 4.5 | 714.5 |
| Embodiment 2-21 | 2.1 | 3.5 | 16.7 | 0.60 | \ | \ | 5.9 | 5.7 | 714.3 |
| Embodiment 2-22 | 3.5 | 3.4 | 15.6 | \ | \ | \ | 4.6 | 4.2 | 714.4 |
| Embodiment 2-23 | 3.5 | 3.0 | 17.5 | 0.20 | \ | \ | 3.2 | 3.0 | 714.3 |
| Embodiment 2-24 | 3.5 | 3.0 | 17.5 | \ | 0.7 | \ | 4.4 | 4.0 | 714.5 |
| Embodiment 2-25 | 3.5 | 3.0 | 17.5 | \ | 1.1 | \ | 3.9 | 3.9 | 714.3 |
| Embodiment 2-26 | 3.5 | 3.0 | 17.5 | \ | 3.4 | \ | 3.6 | 4.0 | 714.4 |
| Embodiment 2-27 | 3.5 | 3.0 | 17.5 | \ | 3.9 | \ | 4.6 | 4.4 | 714.3 |
| Embodiment 2-28 | 3.5 | 3.0 | 17.5 | \ | \ | 1.7 | 4.5 | 4.4 | 714.4 |
| Embodiment 2-29 | 3.5 | 3.0 | 17.5 | \ | \ | 2.3 | 4.1 | 3.5 | 714.5 |
| Embodiment 2-30 | 3.5 | 3.0 | 17.5 | \ | \ | 4.6 | 4.2 | 3.7 | 714.3 |
| Embodiment 2-31 | 3.5 | 3.0 | 17.5 | \ | \ | 5.0 | 4.9 | 4.1 | 714.4 |
| Embodiment 2-32 | 3.5 | 3.0 | 17.5 | \ | 2.7 | 3.2 | 3.4 | 3.1 | 714.6 |

As can be seen from Table 2, by further adjusting the value of P in the mass percent P% of 1,3-propane sultone in the electrolyte solution to satisfy $2.6 \leq P \leq 4.7$, this application can further alleviate the resistance growth rate during high-temperature cycling and the resistance growth rate during fast-charge cycling. On this basis, the value of P is further adjusted to satisfy $3.1 \leq P \leq 4.2$, thereby further significantly reducing the resistance growth rate during high-temperature cycling and the resistance growth rate during fast-charge cycling of the secondary battery.

Especially, by adjusting the value of $F_1$ in the mass percent $F_1$% of fluorobenzene in the electrolyte solution to satisfy $1.1 \leq F_1 \leq 4.3$, the secondary battery can exhibit a lower resistance growth rate during high-temperature cycling and a lower resistance growth rate during fast-charge cycling. Further, by adjusting the value of $F_2$ in the mass percent $F_2$% of

fluoroethylene carbonate in the electrolyte solution to satisfy $10.3 \leq F_2 \leq 19.8$, this application can more significantly alleviate the resistance growth rate during high-temperature cycling and the resistance growth rate during fast-charge cycling. Especially, by adjusting the value of $F_3$ in the mass percent $F_3\%$ of lithium difluorophosphate in the electrolyte solution to satisfy $0.01 \leq F_3 \leq 0.32$, this application can further alleviate the resistance growth rate during high-temperature cycling and the resistance growth rate during fast-charge cycling.

Especially, by adjusting the value of S in the mass percent S% of dimethyl sulfone in the electrolyte solution to satisfy $1.1 \leq S \leq 3.4$, this application can further alleviate the resistance growth rate during high-temperature cycling and the resistance growth rate during fast-charge cycling. Especially, by adjusting the value of W in the mass percent W% of 1,4-dioxane in the electrolyte solution to satisfy $2.3 \leq W \leq 4.6$, this application can further alleviate the resistance growth rate during high-temperature cycling and the resistance growth rate during fast-charge cycling. Particularly, when the electrolyte solution contains dimethyl sulfone and 1,4-dioxane simultaneously for coordination, this application can more significantly reduce the resistance growth rate during high-temperature cycling and the resistance growth rate during fast-charge cycling of the secondary battery.

**Embodiments 3-1 to 3-6**

Identical to Embodiment 1-27 except that the mass percent $F_1\%$ of fluorobenzene and the mass percent C% of silicon are adjusted according to Table 3. The mass percent of DEC is adjusted according to the mass percent of fluorobenzene.

**Table 3**

|  | $F_1$ (%) | C (%) | $C/F_1^2$ | $R_1$ (%) | $R_2$ (%) | ED (mAh/cm$^3$) |
|---|---|---|---|---|---|---|
| Embodiment 1-27 | \ | 50.0 | \ | 9.6 | 9.7 | 714.2 |
| Embodiment 3-1 | 1.4 | 30 | 15.3 | 9.9 | 10.2 | 714.4 |
| Embodiment 3-2 | 1.4 | 27 | 13.8 | 8.5 | 9.1 | 714.3 |
| Embodiment 3-3 | 2.6 | 37 | 5.5 | 5.7 | 7.0 | 714.3 |
| Embodiment 3-4 | 2.3 | 37 | 7.0 | 6.4 | 6.7 | 714.4 |
| Embodiment 3-5 | 3.5 | 42 | 3.4 | 7.4 | 9.8 | 714.3 |
| Embodiment 3-6 | 4.3 | 48 | 2.6 | 9.6 | 11.1 | 714.4 |

As can be seen from Table 3, by adjusting the value of $C/F_1^2$ to satisfy $3.4 \leq C/F_1^2 \leq 13.8$, this application can further alleviate the resistance growth rate during high-temperature cycling and the resistance growth rate during fast-charge cycling. Particularly, when the value of $C/F_1^2$ is adjusted to satisfy $5.5 \leq C/F_1^2 \leq 7.0$, the resistance growth rate during high-temperature cycling and the resistance growth rate during fast-charge cycling of the secondary battery can be alleviated more significantly.

Although illustrative embodiments have been demonstrated and described above, a person skilled in the art understands that the foregoing embodiments are never to be construed as a limitation on this application, and changes, replacements, and modifications may be made to the embodiments without departing from the principles and scope of this application.

**Claims**

**1.** A secondary battery, comprising a positive electrode, a negative electrode, and an electrolyte solution; wherein the negative electrode comprises a current collector and a negative electrode composite layer disposed on at least one surface of the current collector, **characterized in that**, the negative electrode composite layer contains silicon-carbon composite particles and a conductive agent, an average particle diameter of the silicon-carbon composite particles is D $\mu$m, the silicon-carbon composite particles comprise silicon and carbon, based on a sum of masses of the silicon and carbon, a mass percent of the silicon is C%, $0.21 \leq C/D^2 \leq 1.2$; and
the electrolyte solution comprises propylene carbonate and ethylene carbonate, and based on a mass of the electrolyte solution, a sum of mass percent of the propylene carbonate and the ethylene carbonate is H%, $15 \leq H \leq 50$.

**2.** The secondary battery according to claim 1, **characterized in that**, $0.39 \leq C/D^2 \leq 0.96$.

3.  The secondary battery according to claim 1 or 2, **characterized in that**, $7.1 \leq D \leq 10.9$, and $25 \leq C \leq 59$.

4.  The secondary battery according to any one of claims 1 to 3, **characterized in that**, the electrolyte solution further comprises propyl propionate and ethyl propionate, and based on a mass of the electrolyte solution, a sum of mass percent of the propyl propionate and the ethyl propionate is L%, $12 \leq L \leq 39$, and $18 \leq H \leq 44$.

5.  The secondary battery according to any one of claims 1 to 3, **characterized in that**, the electrolyte solution further comprises propyl propionate and ethyl propionate; and based on a mass of the electrolyte solution, a sum of mass percent of the propyl propionate and the ethyl propionate is L%, the electrolyte solution satisfies at least one of the following conditions:

$$(1)\ 18 \leq L \leq 34;$$

or

$$(2)\ 24 \leq H \leq 39.$$

6.  The secondary battery according to claim 4 or 5, **characterized in that**, based on a mass of the electrolyte solution, the electrolyte solution satisfies at least one of the following conditions:

    (1) a mass percent of the propyl propionate is $L_1$%, a mass percent of the ethyl propionate is $L_2$%, and $1.3 \leq L_1/L_2 \leq 2.8$; or
    (2) a mass percent of the propylene carbonate is $H_1$%, a mass percent of the ethylene carbonate is $H_2$%, and $0.9 \leq H_1/H_2 \leq 2.3$.

7.  The secondary battery according to claim 6, **characterized in that**, the electrolyte solution satisfies at least one of the following conditions:

$$(1)\ 1.7 \leq L_1/L_2 \leq 2.3;$$

or

$$(2)\ 1.1 \leq H_1/H_2 \leq 2.0.$$

8.  The secondary battery according to any one of claims 1 to 7, **characterized in that**, the electrolyte solution comprises 1,3-propane sultone, based on a mass of the electrolyte solution, a mass percent of the 1,3-propane sultone is P%, and $2.6 \leq P \leq 4.7$.

9.  The secondary battery according to claim 8, **characterized in that**, $3.1 \leq P \leq 4.2$.

10. The secondary battery according to any one of claims 1 to 9, **characterized in that**, the electrolyte solution comprises at least one of fluorobenzene, fluoroethylene carbonate, or lithium difluorophosphate, based on a mass of the electrolyte solution, the electrolyte solution satisfies at least one of the following conditions:

    (1) a mass percent of the fluorobenzene is $F_1$%, and $1.1 \leq F_1 \leq 4.3$;
    (2) a mass percent of the fluoroethylene carbonate is $F_2$%, and $10.3 \leq F_2 \leq 19.8$; or
    (3) a mass percent of the lithium difluorophosphate is $F_3$%, and $0.01 \leq F_3 \leq 0.32$.

11. The secondary battery according to any one of claims 1 to 10, **characterized in that** the electrolyte solution comprises dimethyl sulfone, based on a mass of the electrolyte solution, a mass percent of the dimethyl sulfone is S%, and $1.1 \leq S \leq 3.4$.

12. The secondary battery according to any one of claims 1 to 11, **characterized in that** the electrolyte solution comprises 1,4-dioxane, based on a mass of the electrolyte solution, a mass percent of the 1,4-dioxane is W%, and $2.3 \leq W \leq 4.6$.

13. The secondary battery according to claim 10, **characterized in that**, $3.4 \leq C/F_1^2 \leq 13.8$.

**14.** The secondary battery according to any one of claims 1 to 13, **characterized in that** the silicon-carbon composite particles comprise a carbon framework and a protection layer located on at least a part of a surface of the carbon framework, a material of the protection layer comprises amorphous carbon, and a material of the carbon framework comprises at least one selected from the group consisting of artificial graphite, natural graphite, mesocarbon microbeads, soft carbon, and hard carbon.

**15.** An electronic device, **characterized in that** the electronic device comprises the secondary battery according to any one of claims 1 to 14.

Europäisches
Patentamt

European
Patent Office

Office européen
des brevets

# EUROPEAN SEARCH REPORT

**Application Number**

EP 25 17 4574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/299362 A1 (TURCHENIUK KOSTIANTYN [US] ET AL) 21 September 2023 (2023-09-21) * claims 1, 4, 6, 7, 10, 11, 14-18, 20, 21, 25-28, 38-41 * * claims 50-52, 54-55, 63 * * figure 16 * * paragraphs [0013], [0039], [0072] - [0082], [0153] - [0155] * | 1-15 | INV. H01M4/36 H01M4/38 H01M4/583 H01M10/052 H01M10/0569 H01M4/133 H01M4/134 |
| X | US 2022/223852 A1 (YI TING [CN]) 14 July 2022 (2022-07-14) * claims 1-4, 8, 15, 16 * * paragraphs [0012] - [0014], [0033] - [0037] * * figure 4 * | 1-15 | |

-----

-----

**TECHNICAL FIELDS SEARCHED (IPC)**

H01M

The present search report has been drawn up for all claims

| Place of search | Date of completion of the search | Examiner |
|---|---|---|
| Munich | 3 September 2025 | Riederer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 4574

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2025

| Patent document cited in search report | | | Publication date | Patent family member(s) | | | Publication date |
|---|---|---|---|---|---|---|---|
| US 2023299362 | A1 | | 21-09-2023 | CN | 119213579 | A | 27-12-2024 |
| | | | | DE | 112023001754 | T5 | 20-02-2025 |
| | | | | JP | 2025509492 | A | 11-04-2025 |
| | | | | KR | 20240166535 | A | 26-11-2024 |
| | | | | US | 2023299362 | A1 | 21-09-2023 |
| | | | | WO | 2023177892 | A1 | 21-09-2023 |
| US 2022223852 | A1 | | 14-07-2022 | CN | 113169340 | A | 23-07-2021 |
| | | | | EP | 4050681 | A1 | 31-08-2022 |
| | | | | JP | 7378479 | B2 | 13-11-2023 |
| | | | | JP | 2023512360 | A | 27-03-2023 |
| | | | | US | 2022223852 | A1 | 14-07-2022 |
| | | | | WO | 2022140963 | A1 | 07-07-2022 |

EPO FORM P0459

For more details about this annex : see Official Journal of the European Patent Office, No. 12/82